# EUROPEAN PATENT SPECIFICATION

(11) **EP 2 158 731 B1**
(45) Date of publication and mention of the grant of the patent: **10.07.2013**
(21) Application number: 08765992.6
(22) Date of filing: 30.05.2008
(51) Int. Cl.: H04W 8/00

(54) **SCANNING PROCEDURE IN WIRELESS LAN, STATION SUPPORTING THE SAME, AND FRAME FORMAT THEREFOR**
ABTASTVERFAHREN IN EINEM DRAHTLOSEN LAN, DIESES UNTERSTÜTZENDE STATION UND RAHMENFORMAT DAFÜR
PROCÉDÉ DE BALAYAGE UTILISÉ DANS UN RÉSEAU LOCAL SANS FIL, STATION SUPPORTANT LEDIT PROCÉDÉ ET FORMAT DE TRAME ASSOCIÉ

(30) Priority: 01.06.2007 KR 20070054034; 14.03.2008 KR 20080023584
(43) Date of publication of application: 03.03.2010
(73) Proprietor: LG Electronics Inc., Seoul 150-721 (KR)
(72) Inventor: SEOK, Yong Ho, Anyang-si Gyeongki-do 431-749 (KR)
(74) Representative: Cabinet Plasseraud
(86) International application number: PCT/KR2008/003030
(87) International publication number: WO 2008/147130

(56) References cited:
- WO-A1-03/085544
- US-A1- 2005 068 928
- US-A1- 2005 174 945
- US-A1- 2006 092 888
- US-A1- 2007 064 634
- US-B2- 7 200 112

## Description

### Technical Field

The present invention relates to a wireless local area network (LAN), and more particularly, to a scanning procedure in a wireless LAN, a station supporting the scanning procedure, and a frame format for the scanning procedure.

### Background Art

With the development in information communication technology, a variety of wireless communication techniques have been developed. A wireless LAN (WLAN) is a technology permitting wireless access to intra network and/or Internet in specific service areas such as home or companies or air planes by the use of portable terminals such as a personal digital assistant (PDA), a laptop computer, and a portable multimedia player (PMP) on the basis of radio telecommunication technology.

These days, thanks to the increased availability of WLANs, portable terminal users such as laptop computer users are able to perform their tasks with increased mobility. For example, a user can take his laptop computer from his desk into a conference room to attend a meeting, still have access to his local Network to retrieve data, and have access to the Internet via one or more modems or gateways present on the local network without being tethered by wired connection. Similarly, business travelers commonly use their portable terminals to gain access to their email accounts, to check if there is any unread email, and to read and send email.

In the initial WLAN technology, a data rate of 1 to 2 Mbps was supported by the use of frequency hopping, spread spectrum, and infrared communication using a frequency of 24 GHz in accordance with the IEEE 80211. In recent years, with the development of the wireless communication technology, 54 Mbps in maximum can be supported by applying the orthogonal frequency division multiplex (OFDM) technology, etc. to the WLAN. In addition, the IEEE 80211 has developed or is developing wireless communication techniques for improvement in quality of service (QoS), compatibility of an access point (AP) protocol, security enhancement, radio measurement or radio resource measurement, wireless access in vehicular environment, fast roaming, mesh network, inter-working with external networks, wireless network management, and the like.

In the WLAN, a non-AP station (non-AP STA), which is a user terminal, first performs a scanning procedure of searching for an access point (AP) associable for access to a network. The scanning procedure is a procedure of acquiring a list of candidate APs with which the non-AP STA is associated in a subsequent association procedure and information on each of the candidate APs. A terminal accesses an IEEE 80211 WLAN by means of the association procedure and becomes a member of a specific extended service set (ESS).

The scanning procedure is classified into two types. The first type is a passive scanning method using a beacon frame periodically broadcast from an AP. In this method, a non-AP STA can acquire a variety of information required for network access through the candidate APs and/or a variety of service type information or capability information that can be provided by the candidate APs, along with a list of candidate APs transmitting the beacon frame.

The second type is an active scanning method. In this method, a non-AP STA hoping to be a member of a specific ESS first transmits a probe request frame. The probe request frame contains specific service information requested by the non-AP STA. The APs having received the probe request frame transmit a probe response frame to the non-AP STA in response to the received probe request frame. The probe response frame includes a variety of information required for network access through the APs. Accordingly, the non-AP STA can acquire a list of associable APs from the received probe response frame. Other examples of prior art devices can be found disclosed in US2007/064634A1. US2005/174945A1 and US2006/092888A1.

### Disclosure of Invention

### Technical Problem

In the previous scanning procedures, the overhead of the non-AP STA performing the scanning procedure increases in a hot spot where a lot of APs are disposed in a narrow area, thereby causing an unnecessary channel load due to a lot of signaling. In the hot spot, this is because the number of beacon frames that should be received by the non-AP STA is great or a lot of probe response frames are transmitted in response to the probe request frame, thereby increasing the channel traffics.

In the previous scanning procedure, since there is limit on information that can be acquired by a non-AP STA is, the non-AP STA cannot acquire sufficient information on a network from the scanning procedure even if the scan overhead of the non-AP STA increases. When the information on a network acquired in the scanning procedure is not sufficient, the non-AP STA has difficulty in selecting a suitable AP by means of the scanning procedure.

Particularly, when the previous active scanning procedure is used, the non-AP STA cannot clearly set a characteristic of an IEEE 80211 WLAN or a non-IEEE 80211 network to which the access is desired by the non-AP STA in the probe request frame, thereby unnecessarily increasing the number of probe response frames to be received but not to include sufficient information. When the type of a distribution system (DS) is diversified and the non-AP STA intends to use a variety of services provided from the non-IEEE 80211 network, sufficient information on the DS or an the access network (AN) is necessary. However, the non-AP STA could not sufficiently acquire information on the DS or information on the AN by means of the previous scanning procedure.

Accordingly, a goal of the invention is to provide a scanning procedure in a wireless LAN, a station supporting the scanning procedure, and a frame format for the scanning procedure, which can reduce an overhead and a communication channel load resulting from an active scanning procedure.

Another goal of the invention is to provide a scanning procedure in a wireless LAN, a station supporting the scanning procedure, and a frame format for the scanning procedure, which can allow a non-AP STA to sufficiently acquire information on a distribution system or information on an access network which helps selection of a suitable AP from plural candidate APs.

Another goal of the invention is to provide a scanning procedure in a wireless LAN, a station supporting the scanning procedure, and a frame format for the scanning procedure, which can allow a non-AP STA, which wants to use a service provided from an external network, to sufficiently acquire information on a distribution system or information on an access network so as to efficiently use the service.

### Technical Solution

According to an aspect of the invention, there is provided a scanning procedure in a wireless local access network, the scanning procedure comprising: receiving from a first station a probe request frame which comprises a Homogeneous Extended Service Set Identifier(HESSID) field containing a desired HESSID of the first station and a network type field containing a desired network type of the first station; and transmitting a probe response frame to the first station in response to the probe request frame in case that: the HESSID field in the probe request frame is set to a wildcard HESSID or the HESSID of a second station which received the probe request frame; and the network type field in the probe request frame is set to a wildcard network type or the network type of the second station , wherein the HESSID is an identifier for a collection of BSSs in which at least one network reachable at one of the BSSs is reachable at all of the BSSs.

According to another aspect of the invention, there is provided a scanning procedure in a wireless local access network, the scanning procedure comprising: transmitting a probe request frame which comprises a Homogeneous Extended Service Set Identifier (HESSID) field containing a desired HESSID and a network type field containing a desired network type; and receiving a probe response frame in response to the probe request frame from a second station, wherein the desired HESSID specified in the HESSID field is a wildcard HESSID or the HESSID of the second station, and wherein the desired network type specified in the network type field is a wildcard network type or is the network type of the second station , wherein the HESSID is an identifier for a collection of BSSs in which at least one network reachable at one of the BSSs is reachable at all of the BSSs.

According to still another aspect of the invention, there is provided a scanning procedure for a station receiving a probe request frame, the scanning procedure comprising allowing the station to respond with a probe response frame, only if: a Service Set Identifier (SSID) element in the probe request frame indicates a wildcard SSID or the SSID, of the station; a Basic Service Set Identifier (BSSID) field in the probe request frame indicates a wildcard BSSID or the BSSID of the station; a Destination Address (DA) field in the probe request frame indicates a broadcast address or the specific Medium Access Control (MAC) address of the station; a Homogeneous Extended Service Set Identifier (HESSID) field in the probe request frame indicates a wildcard HESSID or the HESSID of the station; and a network type field in the probe request frame indicates a wildcard network type or the network type of the station , wherein the HESSID is an identifier for a collection of BSSs in which at least one network reachable at one of the BSSs is reachable at all of the BSSs.

According to still another aspect of the invention, there is provided an Access Point (AP) for supporting scanning procedure in a wireless local access network, the AP comprising: a processor configured to generate and process frames; and a transceiver operably connected to the processor and configured to transmit and receive the frames for the processor, wherein the transceiver is configured to receive from a first station a probe request frame which comprises a Homogeneous Extended Service Set Identifier(HESSID) field containing a desired HESSID, of a non-AP station and a network type field containing a desired network type of the non-AP station and forward the received the probe request frame to the processor, wherein the processor is configured to generate a probe response frame in response to the probe request frame in case that the HESSID field in the probe request frame is set to a wildcard HESSID or the HESSID of the AP which received the probe request frame and the network type field in the probe request frame is set to a wildcard network type or the network type of the AP and forward the probe response frame to the transceiver, and wherein the transceiver is configured to transmit the probe response frame to the non-AP station, wherein the HESSID is an identifier for a collection of BSSs in which at least one network reachable at one of the BSSs is reachable at all of the BSSs.

According to still another aspect of the invention, there is provided a station for supporting scanning procedure in a wireless local access network, the station comprising: a processor configured to generate and process frames; and a transceiver operably connected to the processor and configured to transmit and receive the frames for the processor, wherein the processor is configured to generate a probe request frame which comprises a Homogeneous Extended Service Set Identifier(HESSID) field containing a desired HESSID and a network type field containing a desired network type and forward the generated probe request frame to the transceiver, and wherein the transceiver is configured to transmit the probe request frame and receive a probe response frame in response to the probe request frame, wherein the HESSID is an identifier for a collection of BSSs in which at least one network reachable at one of the BSSs is reachable at all of the BSSs.

### Advantageous Effects

In the active scanning procedure according to an embodiment of the invention, a non-AP STA can specify a desired homogeneous extended service set identifier (HESSID) and a desired network type using a probe request frame to be transmitted. An AP having received the probe request frame transmits a probe response frame to the non-AP STA, only when the HESSID and the network type specified in the received probe request frame are matched with its own HESSID and network type. As a result, according to the embodiment of the invention, it is possible to reduce the overhead and the channel load of the scanning procedure and the non-AP STA can efficiently select a suitable AP.

From information acquired or requested by a non-AP STA in the previous scanning procedure, the non-AP STA cannot know sufficient information on the DS to which the AP is connected and cannot specify the information in advance in the active scanning procedure. As a result, when plural APs reachable by the non-AP STA exist, the non-AP STA cannot specify sufficient information on the DS connected to the APs by itself or cannot sufficiently acquire the information from a received beacon frame or a probe response frame. For example, the non-AP STA cannot know whether the relevant AP is a mesh access point (MAP) or an AP connected to a wired network through the previous scanning procedure. However, in the scanning procedure according to the embodiment of the invention, a non-AP STA can specify in advance the information on the DS connected to an AP with which the non-AP STA intends to associate or can select an AP connected to a desired DS type.

### Brief Description of the Drawings

Fig. 1 is a diagram illustrating an IEEE 80211 interworking architecture including a WLAN system to which embodiments of the invention are applicable.

Fig. 2 is a diagram illustrating a message flow of a scanning procedure in a WLAN according to a first embodiment of the invention.

Fig. 3 is a block diagram illustrating a format of a probe request frame according to the first embodiment of the invention.

Fig. 4 is a block diagram illustrating a format of an interworking information element included in a frame body of the probe request frame shown in Fig. 3.

Fig. 5 is a block diagram illustrating a format of an interworking capability field of the interworking information element shown in Fig. 4.

Fig. 6 is a block diagram illustrating a format of a network type field of the interworking information element shown in Fig. 4.

Fig. 7 is a block diagram illustrating a format of a probe request message used for a second embodiment of the invention.

Fig. 8 is a diagram illustrating a procedure flow of an AP having received the probe request message shown in Fig. 7.

Fig. 9 is a block diagram illustrating another format of the prove request message used for the second embodiment of the invention.

Fig. 10 is a diagram illustrating a procedure flow of an AP having received the probe request message shown in Fig. 9.

Fig. 11 is a block diagram illustrating another format of the prove request message used for the second embodiment of the invention.

Fig. 12 is a diagram illustrating a procedure flow of an AP having received the probe request message shown in Fig. 11.

Fig. 13 is a block diagram illustrating another format of the prove request message used for the second embodiment of the invention.

Fig. 14 is a diagram illustrating a procedure flow of an AP having received the probe request message shown in Fig. 13.

Fig. 15 is a block diagram illustrating another format of the prove request message used for the second embodiment of the invention.

Fig. 16 is a flow diagram illustrating an active scanning procedure using the probe request message shown in Fig. 15 and an association procedure subsequent thereto.

Fig. 17 is a block diagram illustrating a format of an interworking information element according to a third embodiment of the invention.

Fig. 18 is a block diagram illustrating a format of an interworking capability field of the interworking information element shown in Fig. 17.

Fig. 19 is a block diagram illustrating a format of a network type field of the interworking information element shown in Fig. 17 according to an embodiment of the invention.

### Best Mode for Carrying Out the Invention

Hereinafter, embodiments of the invention will be described in detail with reference to the accompanying drawings. A wireless local area network (WLAN) is exemplified as a wireless communication system in the following embodiments, but it is only exemplary. Accordingly, the following embodiments of the invention can be similarly applied to wireless communication systems other than the WLAN, except for wireless communication systems not permitted in nature. In this case, terms or words specific to the WLAN and used in the following embodiments of the invention can be properly modified into terms or words commonly in the relevant wireless communication systems.

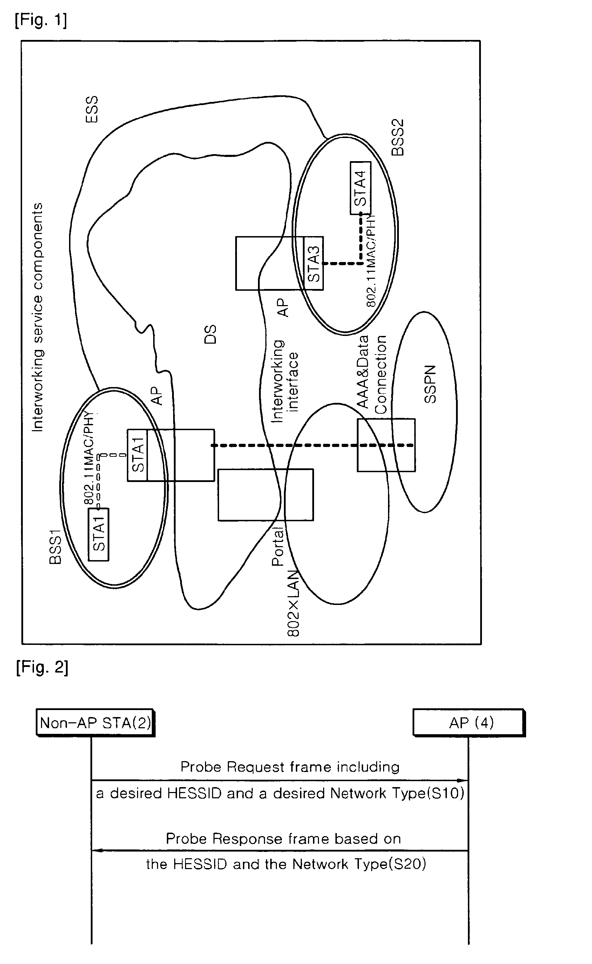

Fig. 1 is a diagram illustrating an IEEE 80211 interworking architecture including a WLAN system to which a scanning procedure according to the embodiments of the invention is applicable. An interworking service is defined in the IEEE 80211 u standard. The main purpose of the interworking service is to permit transmission of information from an external network, to help selection of a network, and to permit an emergency service. The IEEE 80211u standard prescribes all protocols therefor, for example, an interworking interface. In the interworking service, a terminal as a non-AP STA can access services provided from the external network depending on subscription or other characteristics of the external network.

Referring to Fig. 1, an interwork-capable access point (AP) in a wireless system can interwork with the external network using a logical interworking interface. The external network is symbolically shown as an SSPN (Subscription Service Provider Network) in Fig. 1 and the specific configuration thereof does not relate to the embodiments of the invention. The external network is connected to access points via interworking interface and AAA (Authentication, Authorization, and Accounting) & data connection. The interworking interface goes transparently through a portal and an IEEE 802xLAN.

The WLAN system includes one or more basic service sets (BSS). The BSS is a set of stations (STA) communicating with each other in successful synchronization, and is not a concept indicating a specific area. The BSS can be classified into an infrastructure BSS and an independent BSS (IBSS). The infrastructure BSS (BSS1 and BSS2) includes one or more STAs (STA1, STA3, and STA4), an access point (AP) which is an STA providing a distribution service, and a distribution system (DS) connecting plural APs (AP1 and AP2) one another. On the other hand, the IBSS does not include an AP and thus all the STAs are mobile stations (STA6, STA7, and STA8). The IBSS does not permit the access to the DS so as to constitute a self-contained network. The embodiments of the invention relate to the infrastructure BSS.

Collection of BSSs in which the set of reachable networks defined by their service set identifier (SSID) and services provided by those networks available at any BSS are available at all BSSs is a homogenous extended service set identifier (HESSID). All BSSs identified by the HESSID must also be in the same mobility domain, if one BSS is defined.

A STA is a functional unit including a medium access control (MAC) interface and a physical layer interface for a wireless medium in accordance with the IEEE 80211 standard and includes both APs and non-AP STAs in a wide meaning. A mobile terminal operated by a user is a non-AP STA (STA1, STA3, STA4, STA6, STA7, and STA8). Simply, a STA may mean a non-AP STA. The non-AP STA may be called a wireless transmitting/receiving unit (WTRU), user equipment (UE), a mobile station (MS), a portable terminal, or a mobile subscriber unit.

The AP (AP1 and AP2) is a functional entity providing access to the DS via a wireless medium for the associated stations. A communication between the non-AP STAs in the infrastructure BSS is made through the AP in principle, but the non-AP STAs may communicate directly with each other when a direct link is set up therebetween. The AP may be called a convergence controller, a base station (BS), a node-B, a base transceiver system (BTS), or a site controller, in addition to the tile of an access point.

Plural infrastructure BSSs can be connected to each other through the DS. The plural BSSs connected through the DS are called an extended service set (ESS). The STAs in the same ESS can communicate with each other and the non-AP STAs can move from one BSS to another BSS while communicating without any interception.

The DS is a system for allowing an AP to communicate with another AP. Accordingly, the AP can transmit a frame for the STAs associated with the BSS managed by the AP, forward a frame when a STA moves to another BSS, or forward a frame to an external network such as a wired network. The DS is not limited in type as long as it can provide a predetermined distribution service defined in the IEEE 80211 standard and thus may construct networks various types and/or characteristic.

For example, the DS may be a wireless network such as a mesh network or a physical structure (wired network) for connecting the APs to each other. In the wireless DS, for example, in the mesh network in accordance with the IEEE 80211s, the end-to-end delay or the throughput may be remarkably deteriorated in comparison with a wired network. However, the wireless network can be installed in a more flexible structure in a space where it is difficult to install a wired network. Regardless of the wired network or the wireless network, the DSs may have predetermined differences in data transmission rate or bandwidth depending on the performance or characteristics thereof and may be different from each other in connection to an external network such as the Internet.

A combination of the DS and one or more APs is called an access network (AN). The WLAN system includes one or more APs and the DS and may further include one or more portals. It is also the logical location of distribution and integration service functions of an extended service set (ESS).

When the non-AP STA can know the above-mentioned information (information whether the DS is a wireless network or a wired network, network type information, DS information such as the maximum data transmission rate or the bandwidth supported by the DS, or information whether the DS provides connection to an external network such as the Internet) of the DS in the scanning procedure, it helps the non-AP STA select a suitable AP. When the non-AP STA intends to associate with an AP, to perform the BSS transition while using services in the ESS, or to use services provided by interworking with the external network, the non-AP STA needs to select an AP in consideration of the DS information, the network type information, and/or the HESSID. Specifically, since a lot of APs exist in a narrow space like a hot spot, it is necessary for the non-AP STA to select a suitable AP among the APs considering the DS information of each of the APs. In addition, if the non-AP STA can specify a desired HESSID and a desired network type in the active scanning procedure, it is possible to perform an efficient scanning procedure.

First Embodiment

Fig. 2 is a diagram illustrating a message flow of a scanning procedure in a WLAN according to a first embodiment of the invention. The first embodiment of the invention relates to an active scanning procedure, where a non-AP STA 2 and an AP are stations supporting an interworking service, that is, interworking-capable STAs.

Referring to Fig. 2, the non-AP STA 2 transmits a probe request frame (S 10). The probe request frame can be sent to a broadcast destination address or a unicast destination address. The probe request frame contains HESSID information and network type information desired by the non-AP STA 2 and may further contain desired SSID information and BSSID information.

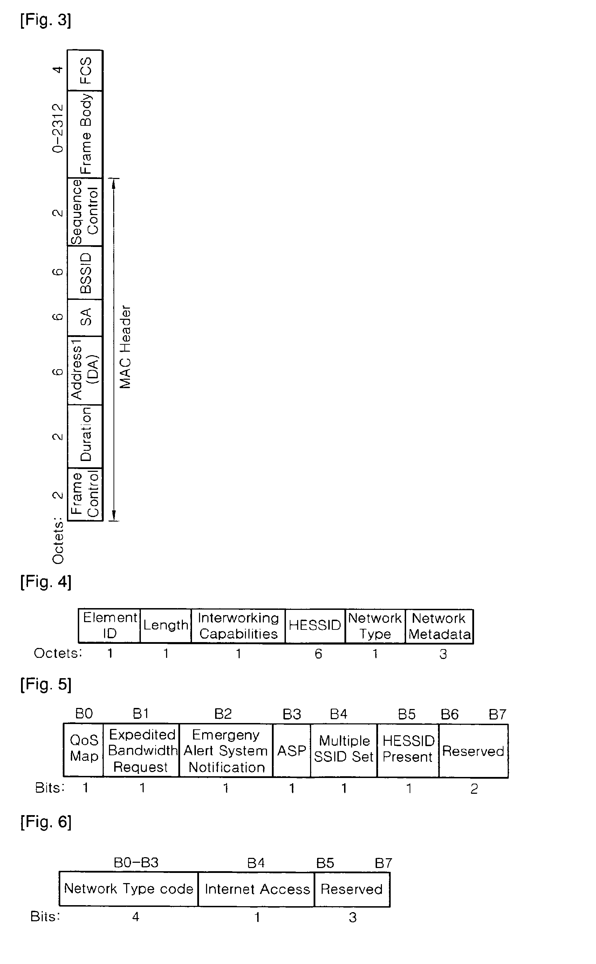

Fig. 3 is a block diagram illustrating a format of the probe request frame. Referring to Fig. 3, the probe request frame includes a medium access control (MAC) header, a frame body, and a frame check sequence (FCS). The MAC header includes a frame control field, a duration field, a destination address (DA) field, a sending address (SA) field, a basic service set identifier (BSSID) field, and a sequence control field.

The frame control field contains a variety of information necessary for processing the relevant frame and includes a protocol version subfield, a type and subtype subfield, a To DS subfield, and a From DS subfield. In the probe request frame, the type and subtype subfield is set to a value indicating the "probe request." The duration field contains a duration value defined for the probe request frame. The destination address field is set to a destination address of the probe request frame and may be a broadcast address or an address of a specific STA desired by the non-AP STA 2, for example, an address of the AP 4. The sending address field is set to an address of the STA transmitting the probe request frame, that is, a MAC address of the non-AP STA 2 The BSSID field is set to a specific BSSID desired by the non-AP STA 2 or a wildcard BSSID. The sequence control field includes a sequence number subfield indicating a sequence number of MSDUs (MAC Service Data Units) or MMPDUs (MAC Management Protocol Data Units) and a fragment number subfield indicating fragment numbers of the MSDUs or MMPDUs.

An example of Information elements which is included in the frame body of the probe request frame are shown in Table 1. Referring to Table 1, the frame body includes an SSID information element, a supported rate information element, a request information element, an extended supported rate information element, an inter-working information element, and an SSID container information element.

Table 1

**[Table 1]**

| Order | Information |
|---|---|
| 1 | SSID |
| 2 | Supported Rates |
| 3 | Requested Information |
| 4 | Extended Supported Rates |
| 5 | Interworking |
| 6 | SSID Container |
| Last | Vendor Specific |

The SSID information element is used to indicate an identity of an ESS and contains an SSID of a specific ESS desired by the non-AP STA 2 or a wildcard SSID. The support rate information element is used to specify up to eight rates in operational-rate-set parameters. The request information element is used to specify information pieces which are requested to be contained in the probe response frame by the response STA, for example, the AP 4. The extended support rate information element contains additional support rate information not included in the support rate information element and is an optional element required only when necessary.

The interworking information element contains information on the interworking service capability of the STA and a format thereof is shown in Fig. 4. Referring to Fig. 4, the interworking information element includes an element ID field, a length field, an interworking capability field, an HESSID field, a network type field, and a network metadata field.

The element ID field is set to a value indicating the interworking information element. The length field is set to a length of the interworking capability field. In case of a non-AP STA, the value of the length field may be 1. In case of an AP, the value of the length field may be 5 or 11, which depends on whether the HESSID field exists.

The interworking capability field is a bit field indicating the interworking capability which the STA intends to notify and/or specify. A format of the interworking capability field is shown in Fig. 5 Referring to Fig. 5, the interworking capability field includes a QoS map bit field and an HESSID present bit field, etc.

The HESSID field specifies the value of the HESSID. The HESSID field is optionally present depending on the setting of the HESSID present bit field of the interworking capability field. For example, when the HESSID present bit field is set to "1", the HESSID field exists in the interworking information element. The non-AP STA can use the HESSID field to indicate a desired HESSID in the active scanning procedure.

The network type field is used to indicate a network type. The non-AP STA can use the network type field to indicate a desired network type in the active scanning procedure. A format of the network type field is shown in Fig. 6. Referring to Fig. 6, the network type field includes a network type code subfield indicating a network type and an Internet access subfield indicating the connection to the Internet. For example, the network type can include a private network, a free public network, and an emergency network. The Internet Access bit is set to "1" whenever any of the SSIDs on this BSSID have their Internet/Intranet bit in the Network Metadata field set to "1". If all of the SSIDs on this BSSID have their Internet/Intranet bit in the Network Metadata field set to "0", then the Internet Access bit is set to "0".

The Network Metadata field contains descriptive data for the BSS. This field is used to advertise metadata for the default and non-default SSIDs included in the BSSID. The Network Metadata field may comprise a next authentication step required (NASR) field indicating that the network requires an additional authentication procedure and an Internet/Intranet bit-field for indicating whether the network provides connectivity to the Internet.

The SSID container information element is used to contain an index field, an SSID information element and optional RSN information element for use by Interworking capable STAs in accordance with the scanning procedures of the present embodiment.

Referring to Fig. 2 again, one or more APs 4 having received the probe request frame transmits a probe response frame in response to the probe request frame (S20). The probe response frame is transmitted to the non-AP STA 2 According to the embodiment of the invention, all the APs having received the probe request frame from the non-AP STA 2 do not transmit the probe response frame, but only the AP 4 corresponding to values which are set in some fields of the probe request frame having been received and which satisfies the following conditions transmits the probe response frame. Here, some fields may be all or a part of the identification information for identifying an AP or an access network (AN) such as the DS. The AP 4 transmitting the probe response frame is an AP supporting the interworking service, that is, an interworking-capable AP.

The first condition is that the SSID field of the probe request frame is set to a wildcard SSID or the SSID of the AP 4.

The second condition is that the BSSID field of the probe request frame is set to a wildcard BSSID or the BSSID of the AP 4.

The third condition is that the DA field of the probe request frame is set to a broadcast address or the MAC address of the AP 4.

The fourth condition is that the HESSID field of the interworking information element of the probe request frame is set to a wildcard HESSID or the HESSID of the AP 4.

The fifth condition is that the network type field of the interworking information element of the probe request frame is set to a wildcard network type or the network type of the AP 4.

The format of the probe response frame transmitted from the AP 4 in step S20 is the same as shown in Fig. 3 and thus detailed description thereof is omitted. However, the probe response frame is different from the frame request frame, in that the type and the sub-type of the frame control field of the probe response frame are set to a value indicating that the frame is "probe response" and the frame body includes a time stamp information element, a beacon interval information element, an SSID information element, a support rate information element, an interworking information element, an advertisement protocol information element, and an SSID container information element.

According to the above-mentioned embodiment of the invention, the non-AP STA 2 can specify the desired HESSID and/or the network type and transmit the probe request frame containing the desired HESSID and/or the network type in the active scanning procedure. In this case, among the APs having received the probe request frame in which the HESSID and the network type are specified, only the AP of which the HESSID and the network type are matched with the HESSID and the network type specified in the received probe request frame transmits the probe response frame to the non-AP STA having transmitted the probe request frame as the destination address. The non-AP STA 2 does not specify the specific HESSID and the specific network type, but can set them to wildcard values. In this case, the probe response frame is transmitted regardless of the HESSID and the network type of the corresponding AP.

At the time of transmitting the probe request frame, the non-AP STA 2 can set the destination address (DA) to the MAC address or the broadcast address of a specific AP and can set the SSID and the BSSID to specific values or wildcard values. In this case, when the DA, the SSID, and/or the BSSID are matched with those specified in the probe request frame or when the DA field of the probe request frame is set to the broadcast address and the SSID field and the BSSID field are set to the wildcard values, the AP transmits the probe response frame to the non-AP STA having transmitted the probe request frame.

Second Embodiment

A second embodiment of the invention also relates to the active scanning procedure in a wireless LAN. As described above, in the active scanning procedure, a non-AP STA transmits a probe request message having a unicast destination address or a broadcast destination address set therein and one or more APs receive the probe request message. The APs having received the probe request message check identification information elements included in the probe request message and then determines whether they should transmit a probe response message. If no relevant information is included in the received identification information, the APs do not transmit the probe response message. On the other hand, when relevant or matched information is included in the received identification information, the APs can transmit the probe response message to reduce a communication channel load in the wireless LAN.

Here, the identification information includes one or more of a service set ID (SSID), request information, an extended service set ID (ESSID), a network type, and a homogeneous extended service set ID (ESSID). The term "identification information element" is not fixed and represents elements associated with the standard by which the APs transmit the probe response frame in the active scanning procedure.

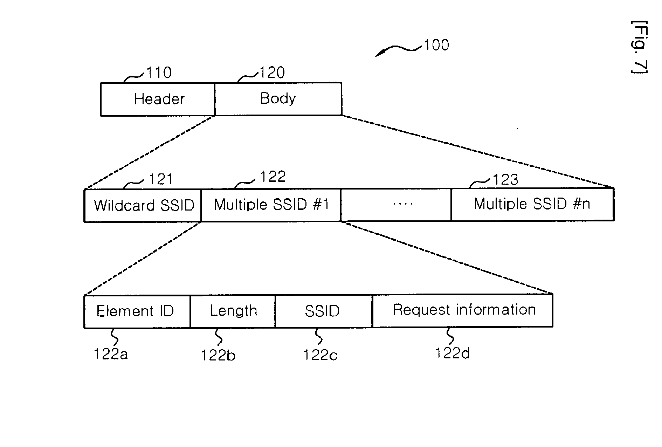

Fig. 7 is a block diagram illustrating a format of the probe request message used in this embodiment. Referring to Fig. 7, the probe request message 100 includes a message header 110 and a message body 120. The probe request message shown in Fig. 7 is different in format from the frame shown in Fig. 3, but is substantially similar to the frame shown in Fig. 3 in that it includes information of the HESSID field for specifying a desired HESSID and a network type field for specifying a desired network type.

The message header 110 includes a control field indicating a type of the message, a duration value field indicating a response time in response to the probe request message, a destination address and sending address field, and a basic service set ID (BSSID) field. The BSSID field is set to a wildcard BSSID or a specific BSSID. The configuration of the message header can be changed depending on the network type.

The message body 120 includes a service set ID (SSID) 121 set to a wildcard SSID or a specific SSID and one or more multiple service set ID field 122 (Multiple SSID #1, ..., Multiple SSID #n).

One multiple service set ID field 122 includes an element ID field 122a indicating that the message has a multiple service set ID and a length field 122b. The multiple service set ID field may further include a service set ID (SSID) field 122c and a request information field 122d, subsequently to the length field 122b.

Here, the service set ID field 122c is used for a station to specify a SSID of a desired network and the request information field 122d is used to specify necessary information from the AP having the SSID. This information may include various parameters of frequency-hopping parameters or frequency-hopping patterns and information pieces for operating a network. The information pieces may be contained individually or together. However, no request information may be contained in the request information field 122d.

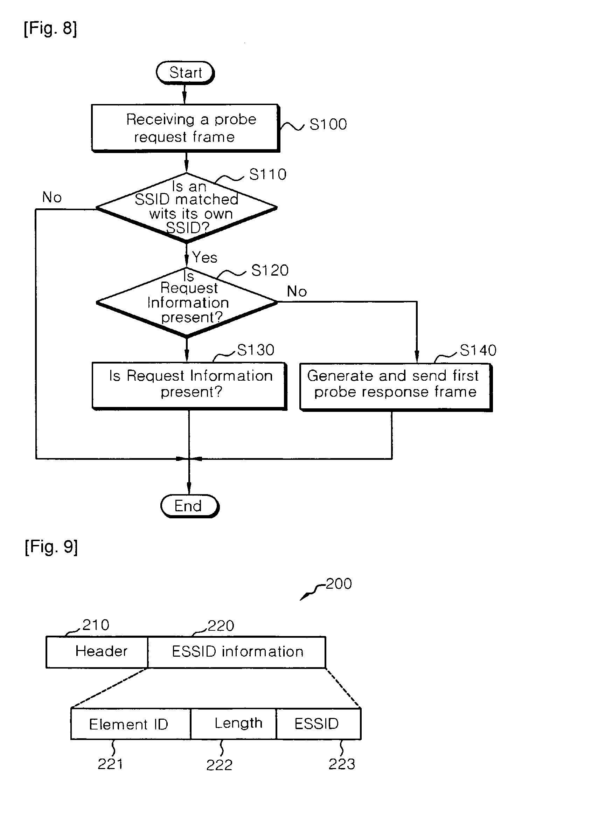

Fig. 8 is a flow diagram illustrating a procedure of the AP having received the probe request message shown in Fig. 7.

Referring to Fig. 8, the AP receives the probe request message (S 100). The probe request message is prepared by a non-AP STA. The AP checks information set in the received probe request message and more specifically in the multiple SSID field 122 of the probe request message. The AP compares the value of the SSID set in the multiple SSID field with its own SSID to determine whether both are equal to each other (S 120).

When the same SSID as its own SSID is not contained in the multiple SSID field as the determination result, the AP does not transmit the probe response message. On the contrary, when the same SSID as its own SSID is contained in the multiple SSID field, the AP checks whether the request information is contained in the information set in the request information field 122d of the multiple SSID field 122 (S130).

When the request information is not contained as the check result, the AP transmits a first probe response message prepared in advance to the non-AP STA (S 140). On the contrary, when the request information is contained, the AP prepares a second probe response message including the request information and transmits the second probe response message to the non-AP STA (S 130).

The first probe response message and the second probe response message include a message header and a message body. The message header may have the same format as the probe request message. The message body of the first probe response message contains all necessary parameters and other network operating information. However, the second probe response message contains only the information requested in the request information field of the probe request message.

Accordingly, in this embodiment of the invention, all the APs in the communicable area of the non-AP STA having prepared and transmitted the probe request message do not response to the probe request message, but only the APs satisfying a predetermined condition or the selected APs response to the probe request message. By transmitting the probe response message containing only the request information at the time of transmitting the probe response message, it is possible to reduce the size of the message.

Fig. 9 is a block diagram illustrating another format of the probe request message used in this embodiment.

Referring to Fig. 9, the probe request message includes a message header 210 and a message body. The configuration of the message header 210 is the same as the example described with reference to Fig. 7 and thus description thereof is omitted. The message body includes an ESSID information field 220.

The ESSID information field 220 includes an element ID subfield 221 indicating an ESSID element, a length field 222 indicating the length of a subsequent ESSID field, and an ESSID field 223 indicating ID of the AP group performing the same function.

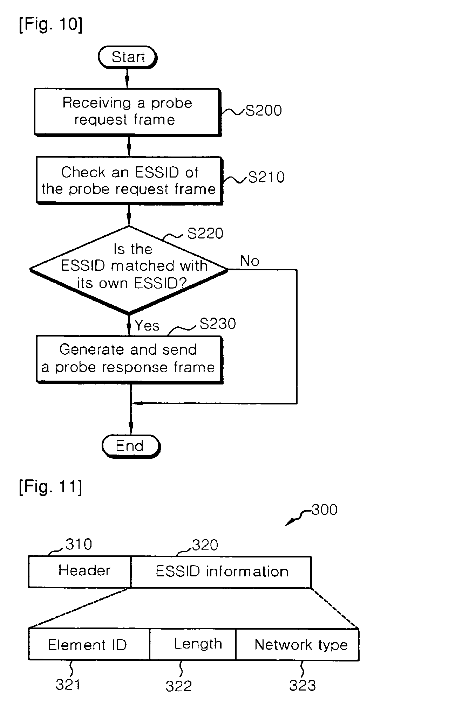

Fig. 10 is a flow diagram illustrating a procedure of the AP having received the probe request message shown in Fig. 9.

Referring to Fig. 10, one or more APs receive the probe request message (S200). The AP processes the probe request message and checks the information set in the SSID information field 220 (S210). The AP compares the ESSID contained in the ESSID information field 220 with its own ESSID to determine whether both are equal to each other (S220). When the ESSID of the received probe message is equal to its own ESSID as the determination result, the AP prepares a probe response message and transmits the probe response message (S230). On the contrary, when both ESSIDs are not equal to each other, the AP does not response to the probe request message.

Accordingly, in the second example of this embodiment, all the APs do not response to the probe request message, but only the APs having the same ESSID as the ESSID contained in the probe request message, thereby reducing the communication channel load in the active scanning procedure.

Fig. 11 is a block diagram illustrating another format of the probe request message used in this embodiment.

Referring to Fig. 11, a probe request message 300 includes a message header 310 and a message body 320. The configuration of the message header 310 is similar to the example described with Fig. 7 and thus description thereof is omitted. The message body 320 includes a network type information element.

The network type information element includes an element ID field 321 indicating the network type information element, a length field 322 indicating the length of a subsequent network type field, and a network type field 323. The network type field 323 is used to indicate the type of the corresponding network. The corresponding network type can indicate various network types such as a home network, an enterprise network, an enterprise network with guest access, and a public free or commercial network.

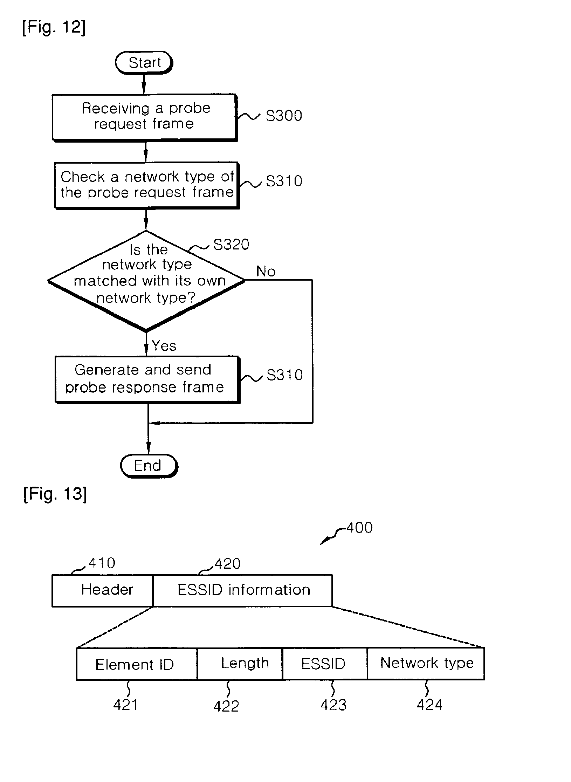

Fig. 12 is a flow diagram illustrating a procedure of the AP having received the probe request message shown in Fig. 11.

Referring to Fig. 12, one or more APs receive the probe request message (S300). When the network type information element is included in the received probe request message, the AP checks the network type contained in the network type information element (S310). The AP compares the checked network type with its own network type (S320). When the network type is equal to its network type as the check result, the AP prepares and transmits a probe response message (S330). On the contrary, when both network types are not equal to each other, the AP does not response to the probe request message.

Accordingly, in the third example of this embodiment, all the APs do not also response to the probe request message, but only the APs having the same network type as the network type set in the probe request message. Accordingly, according to this embodiment of the invention, it is possible to reduce the communication channel load in the active scanning procedure.

Fig. 13 is a block diagram illustrating another format of the probe request message used in this embodiment.

Referring to Fig. 13, a probe request message 400 includes a message header 410 and a message body 420. The configuration of the message header 410 is similar to the example described with Fig. 7 and thus description thereof is omitted. The message body 420 includes an HESSID information element. The ESSID information element includes an element ID subfield 421 indicating that the information element is the ESSID, a length field 422 indicating the lengths of an ESSID subfield and a network type subfield subsequent thereto, an ESSID field 423, and a network type field 424. The network type field 424 is used to indicate the network type, an example of which is similar to that of the third example.

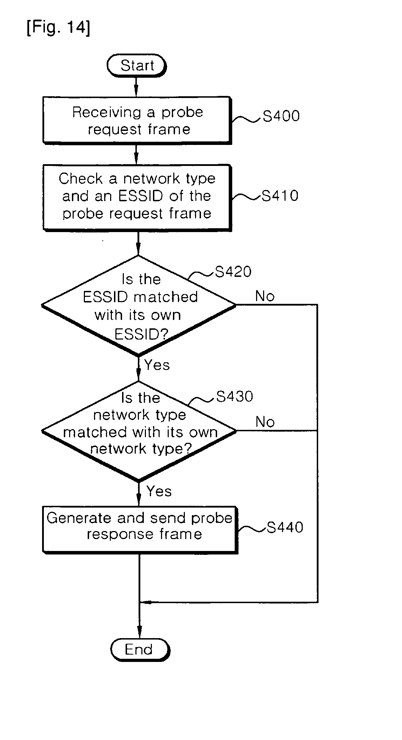

Fig. 14 is a flow diagram illustrating a procedure of the AP having received the probe request message shown in Fig. 13.

Referring to Fig. 14, one or more APs receive the probe request message (S400). When the ESSID information element is included in the received probe request message, the AP checks the ESSID contained in the ESSID information element (S410). The AP compares the checked ESSID with its own ESSID (S420). When the ESSID is equal to its ESSID as the check result, the AP prepares and transmits a probe response message (5430). On the contrary, when both ESSIDs are not equal to each other, the AP does not response to the probe request message.

Accordingly, in the fourth example of this embodiment, all the APs do not also response to the probe request message, but only the APs having the same network type as the network type set in the probe request message. Accordingly, according to this embodiment of the invention, it is possible to reduce the communication channel load in the active scanning procedure.

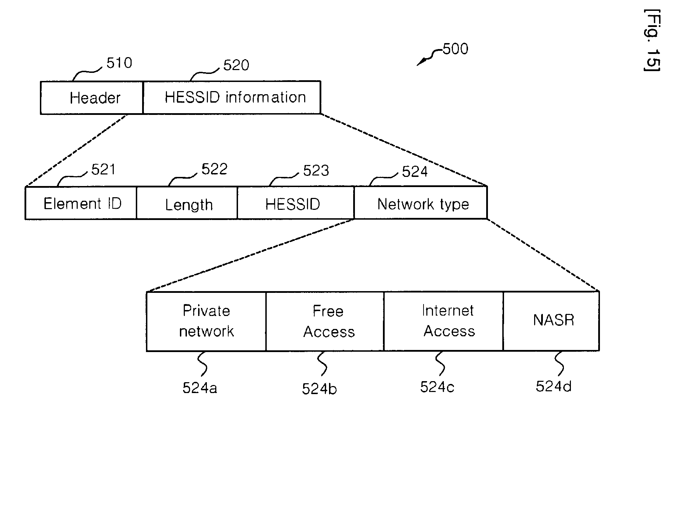

Fig. 15 is a block diagram illustrating another format of the probe request message used in this embodiment.

Referring to Fig. 15, a probe request message 500 includes a message header 510 and a message body 520. The configuration of the message header 510 is similar to the first example described with Fig. 7 and thus description thereof is omitted. The message body 520 includes an HESSID information element. The HESSID information element is used to indicate the network type and can be determined on the basis of information such as private versus public, free access, Internet access, and an addition authentication procedure required for access to a network.

The HESSID information element 520 includes an element ID field 521 indicating an HESSID, a length field 522 indicating the lengths of an HESSID field and a network type subfield subsequent thereto, an HESSID field 523, and a network type subfield 524. The network type field 524 includes a private network subfield 524a indicating the private network (or the public network), a free access subfield 524b indicating the free access, an Internet access subfield 524c indicating the Internet access, a next authentication step required subfield (NASR) 524d indicating whether an addition authentication procedure is required using an authentication method such as UMA (Unified Authentication Management) or EAPOL (Extensible Authentication Protocol Management).

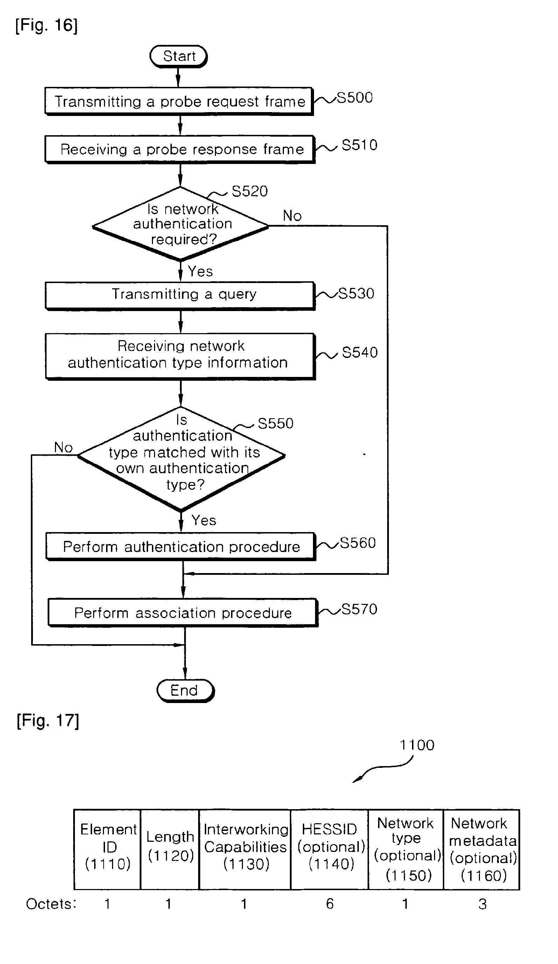

Fig. 16 is a flow diagram illustrating the active scanning procedure and an association procedure subsequent thereto using the probe request message shown in Fig. 15

Referring to Fig. 16, a non-AP STA transmits the probe request message shown in Fig. 15 to an address of a specific AP or a broadcast address as a destination address (S500). One or more Pas having received the probe request message transmits a probe response message to the non-AP STA in response to the probe request message (S510). In this step, only the AP matched with a variety of information pieces (as described in the first embodiment and the second embodiment) specified in the probe request message can transmit the probe response message.

The non-AP STA searches the received probe response message for the network type of the AP having transmitted the probe response message and checks whether an additional authentication is required for the network (S520). In this case, when the additional authentication procedure is not required for the network, the non-AP STA performs the association procedure with the AP (S570). On the contrary, when the additional authentication procedure is required for the network, the non-AP STA transmits a query message to the corresponding AP (S530). The AP having received the query message transmits its own network authentication type information to the non-AP STA and the non-AP STA receives the network authentication type information from the AP (S540).

At this time, the network authentication type contained in the network authentication type information may be plural. Network authentication type indicators contained in the network authentication type information may indicate an authentication method such as on-line enrollment, UAM, 8021X, and WPS (WiFi Protected Setup) or may include version information of the corresponding protocol together.

The station having received the authentication type information determines whether it is matched with its own authentication type (S550). When its own authentication type is matched with the network authentication type received from the AP, the station performs a necessary authentication procedure (S560) and then performs the association procedure with the corresponding AP (S570). On the contrary, when both authentication types are matched with each other, the station does not perform the authentication procedure and the association procedure on the corresponding AP.

Third Embodiment

According to a third embodiment of the invention, DS information is added to the beacon frame used in a passive scanning procedure, the probe request frame used in the active scanning procedure, and/or the probe response frame. The DS information is a variety of information on the DS and can include DS type information indicating whether the DS is a wired network or a wireless network such as a mesh network or information on the maximum data transmission rate supported by the DS or the bandwidth used therein. The DS information is contained in one field or an information element (IE) of the beacon frame, the probe request frame, and/or the probe response frame, and a method of expressing the DS information is not limited at all. For example, the DS information may have a format of a bit field indicating whether it is supportable or a format indicating the maximum and/or minimum value supportable.

Fig. 17 is a block diagram illustrating a format of an interworking information element as an example of the information element (IE) containing the DS information. The interworking information element is one IE contained in a transmission frame in the scanning procedure in accordance with the IEEE 80211u. Accordingly, the interworking information element can be included in the beacon frame or the probe request frame and/or the probe response frame, which are used in the scanning procedure in accordance with the IEEE 80211u.

Referring to Fig. 17, the interworking information element 1100 is used to contain information on the interworking service capability of a STA and includes an element ID field 1110, a length field 1120, and an interworking capability field 1130. The interworking information element 1100 may include an HESSID field 1140, a network type field 1150, and a network metadata field 1160.

The element ID field 1110 is set to a value indicating the interworking information element. The length field 1120 is used to indicate the length of the interworking capability field 1130. In a non-AP STA, the length field has a value of 1. In an AP, the length field 1120 may have a value of 5 or 11, which depends on presence of the HESSID field 140.

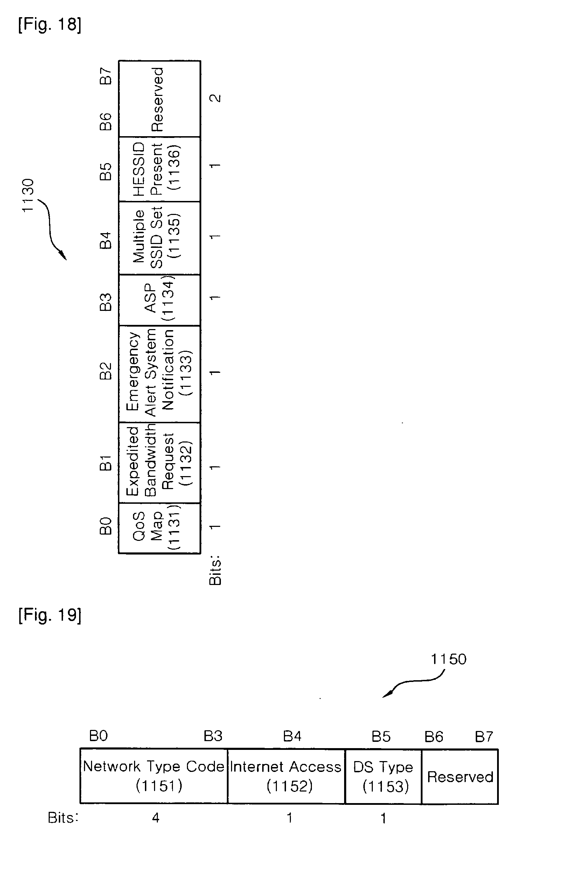

The interworking capability field 1130 is a bit field indicating the capability of an interworking service that the STA intends to notify. A format of the interworking capability field 1130 is shown in Fig. 18. Referring to Fig. 18, the interworking capability field 1130 includes a QoS Map service capability bit 1131, an expedited bandwidth request bit 1132, an emergency alert system notification bit 1133, an active scan protection (ASP) bit 1134, a multiple SSID set bit 1135, and an HESSID present bit 1136

Referring to Fig. 17, the ESSID field 1140 is used to specify the value of the HESSID and is an arbitrary bit that may be present depending on the presence of the HESID presence bit 1136 in the interworking capability field 1130. The non-AP-STA uses the HESSID field 1140 to instruct a desired HESSID in the active scanning procedure.

The network type field 1150 is used to indicate information on network types that can be serviced by the non-AP STA. The network type field 1150 may be also used to indicate information on a network type desired by the non-AP STA in the active scanning procedure. The network type field 1150 according to the embodiment of the invention includes an arbitrary subfield such as a DS information subfield for indicating information on the DS. The DS information subfield contains information on the DS type for indicating whether the DS is a wired network or a wireless network. The DS information subfield may further contain information on the maximum data transmission rate supported by the DS and/or information on the bandwidth used in the DS.

An example of the format of the network type field 1150 including the DS information subfield according to this embodiment of the invention is shown in Fig. 19. Referring to Fig. 19, the network type field 1150 includes a network type code subfield 1150, an Internet access subfield 1152, and a DS type subfield 1153. The DS type subfield 1153 is used to indicate whether the DS is a wireless network or a wired network, which is an example of the DS information. Accordingly, the network type field 1150 may further include another subfield containing information on the DS.

The network type code subfield 1151 can be used for a non-AP STA to instruct a desired network type in the active scanning procedure or to indicate information on networks which can be serviced by the non-AP STA. Table 2 shows an example of network type codes contained in the network type code subfield 1151.

Table 2

**[Table 2]**

| Network Type Code Bits (B0-B3) | Meaning | Description |
|---|---|---|
| 0x0 | Private network | Non-authorized users are not permitted on this network. Examples of this network type are home networks and enterprise networks, which may employ user accounts. These networks may or may not employ encryption. |
| Ox1 | Private network with guest access | Private network but guest accounts area available. If more than 1 SSID is on the BSSID, then one or more guest SSIDs may be identified via their Network Metadata field. |
| 0x2 | Chargeable public network | The network is accessible to anyone, however, access to the network requires payment. Further information on types of charges may be available through other methods (802.21, http or https redirect). |
| 0x3 | Free public network | The network is accessible to anyone and no charges apply for the network use. |
| 0x4 | Emergency network | The network supports Emergency Services. Further information is available from a GAS native query (see 7.3.3) |
| 0x5 to 0xE | Reserved | Not used. |
| 0xF | Reserved | Reserved for wildcard network type |

The Internet access subfield 1152 is set to "1" when one or more SSID in the BSSID is set to "1" as the Internet/intranet bit in the network metadata field 1160. When all the SSIDs in the BSSID are set to "0" as the Internet/intranet bit in the network metadata field 1160, the Internet access subfield 1152 is set to "0."

Referring to Fig. 19, the DS type subfield 1153 of the network type field 1150 is an example of the information on the DS, which indicates whether the DS is a wired network or a wireless network such as a mesh network. For example, when the DS is a wired network, the DS type subfield 1153 is set to "1." When the DS is a wireless network, the DS type subfield 1153 is set to "0."

The network type field 1150 including the DS type subfield 1153 according to the embodiment of the invention can be included in the beacon frame or the probe request frame and/or the probe response frame. Accordingly, by using a frame including the DS type subfield 1153 according to the embodiment of the invention, the non-AP STA can specify a desired DS type and transmit the probe request frame in the active scanning procedure. The AP having received the probe request frame including the DS type subfield 1153 can transmit the probe response frame only when the DS connected to the AP corresponds to the DS type specified in the received probe request frame. When the DS type subfield 1153 is included in the beacon frame or the probe response frame, the non-AP STA can select an AP suitable for the desired DS type among the candidate APs acquired in the scanning procedure and can be associated therewith.

According to the embodiment of the invention, when a terminal receives a beacon frame or a probe response frame in the passive scanning procedure, the terminal can select and access a proper AP by the use of the DS information contained in the interworking information element 1150 of the received frame or other information elements or field of the received frame. When a terminal performs the active scanning procedure, the terminal can select and access a proper AP by the use of the DS information contained in the interworking information element 1150 of the frame or other information elements or fields of the received frame, by exchanging the probe request frame and the probe response frame.

By the use of the information acquired or requested by a terminal in the past scanning procedure, the terminal cannot know information on the DS connected to the AP and cannot specify the AP. Accordingly, when plural APs are connectable to the terminal, the terminal cannot specify or know the information on the DS connected to the APs by the use of the received frame. For example, the terminal cannot know whether the corresponding AP is a mesh access point (MAP) or an AP connected to a wired network and thus accesses an arbitrary AP. However, according to the embodiments of the invention, in the scanning procedure, a terminal can specify information on the DS connected to a desired AP or select an AP connected to a desired DS type, and can be associated with the selected AP. Accordingly, a terminal can select a proper AP by the use of the information on the DS connected to the AP.

The embodiments described above in detail are only examples explaining technical features of the claimed invention and it should be understood that the technical features are not limited to the specific embodiments. The scope of the invention is defined by the appended claims.

### Industrial Applicability

The invention relates to networking associated with the wireless communication technology, communication protocols, and communication procedures in wireless communication systems and can be applied to construction of wireless communication systems and manufacturing of equipments or stations (including wireless stations and base stations) constituting the wireless communication systems. Particularly, the invention can be applied to the interworking with an external network in a wireless communication system.

## Claims

1. A scanning procedure in a wireless local access network having at least one Basic Service Set, BSS, the scanning procedure comprising:
Receiving (S10) from a first station a probe request frame which comprises a Homogeneous Extended Service Set Identifier, HESSID, field (520) containing a desired HESSID (523) of the first station and a network type field (524) containing a desired network type of the first station; and
transmitting (S20) a probe response frame to the first station in response to the probe request frame in case that:
the HESSID field in the probe request frame is set to a HESSID of a second station which received the probe request frame; and
the network type field in the probe request frame is set to a wildcard network type or a network type of the second station,
wherein the HESSID is an identifier for a collection of BSSs in which at least one network reachable at one of the BSSs is reachable at all of the BSSs.

2. The scanning procedure according to claim 1,
wherein the network type field comprises an internet access subfield for specifying connectivity to an internet.

3. The scanning procedure according to claim 1,
wherein the HESSID field and the network type field are included in an interworking information element, and
wherein the interworking information element further comprises an interworking capabilities field containing the advertised interworking capabilities of the first station.

4. The scanning procedure according to claim 3,
wherein the interworking capabilities field comprises a HESSID Present bit set to '1'.

5. The scanning procedure according to claim 1,
wherein the probe request frame further comprises a Service Set Identifier, SSID, information element containing a desired SSID of the first station, and
wherein the probe response frame is transmitted by the second station in case the desired SSID specified in the SSID information element is an SSID of the second station.

6. The scanning procedure according to claim 5,
wherein the probe request frame further comprises a Basic SSID, BSSID, field containing a desired BSSID of the first station, and a Destination Address, DA, field containing an intended Medium Access Control, MAC, address of the first station, and
wherein the probe response frame is transmitted by the second station in case:
the BSSID field in the probe request frame is set to a BSSID of the second station; and
the DA field in the probe request frame is set to a broadcast address or a MAC address of the second station.

7. The scanning procedure according to claim 6,
wherein the first station is an interworking-capable non-AP, non-Access Point, station and the second station is an interworking-capable AP.

8. The scanning procedure according to claim 1,
wherein the probe response frame comprises an interworking information element containing information about interworking service capabilities of the second station,
wherein the interworking information element comprises a network type field including an internet access subfield and a network metadata field including an internet/intranet subfield, and
wherein the internet access subfield in the network type field is set to '1' if any of SSIDs on this SSIDs have their internet/intranet subfield in the network metadata field is set to '1' or is set to '0' if all of SSIDs on this BSSID have their internet/intranet bit is set '0'.

9. A scanning procedure in a wireless local access network having at least one Basic Service Set, BSS, the scanning procedure comprising:
Transmitting (S20), by a first station, a probe request frame which comprises a Homogeneous Extended Service Set Identifier, HESSID, field (520) containing a desired HESSID (523) and a network type field (524) containing a desired network type; and
receiving (S10) a probe response frame in response to the probe request frame from a second station,
wherein the desired HESSID specified in the HESSID field is a HESSID of the second station,
wherein the desired network type specified in the network type field is a wildcard network type or is a network type of the second station, and
wherein the HESSID is an identifier for a collection of BSSs in which at least one network reachable at one of the BSSs is reachable at all of the BSSs.

10. The scanning procedure according to claim 9,
wherein the network type field comprises an internet access subfield for specifying connectivity to an internet.

11. The scanning procedure according to claim 9,
wherein the probe request frame further comprises a Service Set Identifier, SSID, information element containing a desired SSID, a Basic SSID, BSSID, field containing a desired BSSID, and a Destination Address, DA, field containing an intended Medium Access Control, MAC, address, and
wherein the desired SSID specified in the SSID information element is an SSID of the second station, the desired BSSID specified in the BSSID field is a BSSID of the second station, and the intended MAC address specified DA field is a broadcast address or a MAC address of the second station.

12. An Access Point, AP, for supporting scanning procedure in a wireless local access network having at least one Basic Service Set, BSS, the AP comprising:
a processor configured to generate and process frames; and
a transceiver operatively connected to the processor and configured to transmit and receive the frames for the processor,
wherein the transceiver is further configured to receive from a first station a probe request frame which comprises a Homogeneous Extended Service Set Identifier, HESSID, field (520) containing a desired HESSID (523) of a non-AP station and a network type field (524) containing a desired network type of the non-AP station and forward the received the probe request frame to the processor,
wherein the processor is further configured to generate a probe response frame in response to the probe request frame in case that the HESSID field in the probe request frame is set to a HESSID of the AP which received the probe request frame and the network type field in the probe request frame is set to a wildcard network type or a network type of the AP and forward the probe response frame to the transceiver,
wherein the transceiver is further configured to transmit the probe response frame to the non-AP station,
wherein the HESSID is an identifier for a collection of BSSs in which at least one network reachable at one of the BSSs is reachable at all of the BSSs.

13. The Access Point according to claim 12,
wherein the probe request frame further comprises a Service Set Identifier, SSID, information element containing a desired SSID of the non-AP station, a Basic SSID, BSSID, field containing a desired BSSID of the non-AP station, and a Destination Address, DA, field containing an intended Medium Access Control, MAC, address of the non-AP station, and
wherein the probe response frame is generated, further in case that the desired SSID specified in the SSID information element is an SSID of the AP, the desired BSSID specified in
the BSSID field a BSSID of the AP, and the intended MAC address specified DA field is a broadcast address or a MAC address of the AP.

14. A station for supporting scanning procedure in a wireless local access network having at least one Basic Service Set, BSS, the station comprising:
a processor configured to generate and process frames; and
a transceiver operatively connected to the processor and configured to transmit and receive the frames for the processor,
wherein the processor is configured to generate a probe request frame which comprises a Homogeneous Extended Service Set Identifier, HESSID, field (520) containing a desired HESSID (523) of a peer station and a network type field (524) containing a desired network type of the peer station and forward the generated probe request frame to the transceiver, and
wherein the transceiver is further configured to transmit the probe request frame and receive a probe response frame in response to the probe request frame in case that the HESSID field in the probe request frame is set to a HESSID of the peer station which received the probe request frame and the network type field in the probe request frame is set to a wildcard network type or a network type of the peer station and forward the probe response frame to the processor,
wherein the HESSID is an identifier for a collection of BSSs in which at least one network reachable at one of the BSSs is reachable at all of the BSSs.

15. The station according to claim 14,
wherein the probe request frame further comprises a Service Set Identifier, SSID, information element containing a desired SSID, a Basic SSID, BSSID, field containing a desired
BSSID, and a Destination Address, DA, field containing an intended Medium Access Control, MAC, address.

## Patentansprüche

1. Abtastverfahren in einem drahtlosen LAN mit mindestens einem Basic Service Set, BSS, wobei das Abtastverfahren Folgendes umfasst:
Empfangen (S10) eines Probe-Request-Rahmens von einer ersten Station, welcher ein Homogeneous Extended Service Set Identifier, HESSID, -Feld (520), welches einen gewünschten HESSID (523) der ersten Station enthält, und ein Netzwerkartfeld (524), welches eine gewünschte Netzwerkart der ersten Station enthält, umfasst; und
Senden (S20) eines Probe-Response-Rahmens an die erste Station als Reaktion auf den Probe-Request-Rahmen, in dem Fall, dass:
das HESSID-Feld in dem Probe-Request-Rahmen auf einen HESSID einer zweiten Station eingestellt ist, welche den Probe-Request-Rahmen empfangen hat; und
das Netzwerkartfeld in dem Probe-Request-Rahmen auf eine Wildcard-Netzwerkart oder eine Netzwerkart der zweiten Station eingestellt ist,
wobei der HESSID ein Identifikator für eine Sammlung von BSSs ist, bei welchen mindestens ein Netzwerk, das an einem der BSSs erreichbar ist, an allen der BSSs erreichbar ist.

2. Abtastverfahren nach Anspruch 1,
wobei das Netzwerkartfeld ein Internetzugangsunterfeld zum Spezifizieren der Konnektivität zu einem Internet umfasst.

3. Abtastverfahren nach Anspruch 1,
wobei das HESSID-Feld und das Netzwerkartfeld in einem Zusammenarbeitsinformationselement enthalten sind, und wobei das Zusammenarbeitsinformationselement ferner ein Zusammenarbeitsfähigkeitsfeld umfasst, welches die angekündigten Zusammenarbeitsfähigkeiten der ersten Station enthält.

4. Abtastverfahren nach Anspruch 3,
wobei das Zusammenarbeitsfähigkeitsfeld ein HESSID Present-Bit eingestellt auf ,1' umfasst.

5. Abtastverfahren nach Anspruch 1,
wobei der Probe-Request-Rahmen ferner ein Service Set Identifier, SSID, -Informationselement, welches einen gewünschten SSID der ersten Station enthält, umfasst, und
wobei der Probe-Response-Rahmen durch die zweite Station gesendet wird, in dem Fall, dass der gewünschte SSID, der in dem SSID-Informationselement spezifiziert ist, ein SSID der zweiten Station ist.

6. Abtastverfahren nach Anspruch 5,
wobei der Probe-Request-Rahmen ferner ein Basic SSID, BSSID, -Feld, welches einen gewünschten BSSID der ersten Station enthält, und ein Destination Address, DA, -Feld, welches eine beabsichtigte Medium Access Control, MAC, -Adresse der ersten Station enthält, umfasst, und
wobei der Probe-Response-Rahmen durch die zweite Station gesendet wird, in dem Fall, dass:
das BSSID-Feld in dem Probe-Request-Rahmen auf einen BSSID der zweiten Station eingestellt ist; und
das DA-Feld in dem Probe-Request-Rahmen auf eine Übertragungsadresse oder eine MAC-Adresse der zweiten Station eingestellt ist.

7. Abtastverfahren nach Anspruch 6,
wobei die erste Station eine zusammenarbeitsfähige, Nicht-Zugangspunkt, non AP, Station ist und die zweite Station ein zusammenarbeitsfähiger AP ist.

8. Abtastverfahren nach Anspruch 1,
wobei der Probe-Response-Rahmen ein Zusammenarbeitsinformationselement, welches Informationen über Zusammenarbeitsdienstfähigkeiten der zweiten Station enthält, umfasst,
wobei das Zusammenarbeitsinformationselement ein Netzwerkartfeld, welches ein Internetzugangsunterfeld enthält, und ein Netzwerkmetadatenfeld, welches ein Internet/Intranet-Unterfeld enthält, umfasst, und wobei das Internetzugangsunterfeld in dem Netzwerkartfeld auf '1' eingestellt ist, wenn bei einem der SSIDs dieser SSIDs das Internet/Intranet-Unterfeld in dem Netzwerkmetadatenfeld auf ,1' eingestellt ist, oder es ist auf ,0' eingestellt, wenn bei allen der SSIDs dieses BSSID das Internet/Intranet-Bit auf ,0' eingestellt ist.

9. Abtastverfahren in einem drahtlosen LAN mit mindestens einem Basic Service Set, BSS, wobei das Abtastverfahren Folgendes umfasst:
Senden (S20) eines Probe-Request-Rahmens durch eine erste Station, welcher ein Homogeneous Extended Service Set Identifier, HESSID, -Feld (520), welches einen gewünschten HESSID (523) enthält, und ein Netzwerkartfeld (524), welches eine gewünschte Netzwerkart enthält, umfasst; und
Empfangen (S10) eines Probe-Response-Rahmens als Reaktion auf den Probe-Request-Rahmen von einer zweiten Station,
wobei der gewünschte HESSID, der in dem HESSID-Feld spezifiziert ist, ein HESSID der zweiten Station ist,
wobei die gewünschte Netzwerkart, die in dem Netzwerkartfeld spezifiziert ist, eine Wildcard-Netzwerkart oder eine Netzwerkart der zweiten Station ist, und
wobei der HESSID ein Identifikator für eine Sammlung von BSSs ist, bei welchen mindestens ein Netzwerk, welches an einem der BSSs erreichbar ist, an allen der BSSs erreichbar ist.

10. Abtastverfahren nach Anspruch 9,
wobei das Netzwerkartfeld ein Internetzugangsunterfeld zum Spezifizieren der Konnektivität zu einem Internet umfasst.

11. Abtastverfahren nach Anspruch 9,
wobei der Probe-Request-Rahmen ferner ein Service Set Identifier, SSID, -Informationselement, welches einen gewünschten SSID enthält, ein Basic SSID, BSSID,
- Feld, welches einen gewünschten BSSID enthält, und ein Destination Address, DA, -Feld, welches eine beabsichtigte Medium Access Control, MAC, -Adresse enthält, umfasst, und
wobei der gewünschte SSID, der in dem SSID-Informationselement spezifiziert ist, ein SSID der zweiten Station ist, der gewünschte BSSID, der in dem BSSID-Feld spezifiziert ist, ein BSSID der zweiten Station ist, und die beabsichtigte MAC-Adresse, die im DA-Feld spezifiziert ist, eine Übertragungsadresse oder eine MAC-Adresse der zweiten Station ist.

12. Zugangspunkt (AP - Access Point) zum Unterstützen des Abtastverfahrens in einem drahtlosen LAN mit mindestens einem Basic Service Set, BSS, wobei der AP Folgendes umfasst:
einen Prozessor, der zum Erzeugen und Verarbeiten von Rahmen konfiguriert ist; und
einen Sendeempfänger, der operativ mit dem Prozessor verbunden und zum Senden und Empfangen der Rahmen für den Prozessor konfiguriert ist,
wobei der Sendeempfänger ferner zum Empfangen eines Probe-Request-Rahmens von einer ersten Station,
welcher ein Homogeneous Extended Service Set Identifier, HESSID, -Feld (520), welches einen gewünschten HESSID (523) einer Nicht-AP-Station enthält, und ein Netzwerkartfeld (524), welches eine gewünschte Netzwerkart der Nicht-AP-Station enthält, umfasst, und Weiterleiten des empfangenen Probe-Request-Rahmens an den Prozessor konfiguriert ist,
wobei der Prozessor ferner zum Erzeugen eines Probe-Response-Rahmens als Reaktion auf den Probe-Request-Rahmen, in dem Fall, dass das HESSID-Feld in dem Probe-Request-Rahmen auf einen HESSID des AP eingestellt ist, welcher den Probe-Request-Rahmen empfangen hat, und das Netzwerkartfeld in dem Probe-Request-Rahmen auf eine Wildcard-Netzwerkart oder eine Netzwerkart des AP eingestellt ist, und Weiterleiten des Probe-Response-Rahmens an den Sendeempfänger konfiguriert ist,
wobei der Sendeempfänger ferner zum Senden des Probe-Response-Rahmens an die Nicht-AP-Station konfiguriert ist,
wobei der HESSID ein Identifikator für eine Sammlung von BSSs ist, bei welchen mindestens ein Netzwerk, welches an einem der BSSs erreichbar ist, an allen der BSSs erreichbar ist.

13. Zugangspunkt nach Anspruch 12,
wobei der Probe-Request-Rahmen ferner ein Service Set Identifier, SSID, -Informationselement, welches eine gewünschten SSID der Nicht-AP-Station enthält, ein Basic SSID, BSSID, -Feld, welches einen gewünschten BSSID der Nicht-AP-Station enthält, und ein Destination Address, DA, -Feld, welches eine beabsichtigte Medium Access Control, MAC, -Adresse der Nicht-AP-Station enthält, umfasst, und
wobei der Probe-Response-Rahmen ferner in dem Fall erzeugt wird, dass der gewünschte SSID, der in dem SSID-Informationselement spezifiziert ist, ein SSID des AP ist, der gewünschte BSSID, der in dem BSSID-Feld spezifiziert ist, ein BSSID des AP ist, und die beabsichtigte MAC-Adresse, die in dem DA-Feld spezifiziert ist, eine Übertragungsadresse oder eine MAC-Adresse des AP ist.

14. Station zum Unterstützen des Abtastverfahrens in einem drahtlosen LAN mit mindestens einem Basic Service Set, BSS, wobei die Station Folgendes umfasst:
einen Prozessor, der zum Erzeugen und Verarbeiten von Rahmen konfiguriert ist; und
einen Sendeempfänger, welcher operativ mit dem Prozessor verbunden und zum Senden und Empfangen der Rahmen für den Prozessor konfiguriert ist,
wobei der Prozessor zum Erzeugen eines Probe-Request-Rahmens, welcher ein Homogeneous Extended Service Set Identifier, HESSID, -Feld (520), welches einen gewünschten HESSID (523) einer Peer-Station enthält, und ein Netzwerkartfeld (524), welches eine gewünschte Netzwerkart der Peer-Station enthält, umfasst, und Weiterleiten des erzeugten Probe-Request-Rahmens an den Sendeempfänger konfiguriert ist, und
wobei der Sendeempfänger ferner zum Senden des Probe-Request-Rahmens und Empfangen eines Probe-Response-Rahmens als Reaktion auf den Probe-Request-Rahmen, in dem Fall, dass das HESSID-Feld in dem Probe-Request-Rahmen auf einen HESSID der Peer-Station eingestellt ist, welche den Probe-Request-Rahmen empfangen hat, und das Netzwerkartfeld in dem Probe-Request-Rahmen auf eine Wildcard-Netzwerkart oder eine Netzwerkart der Peer-Station eingestellt ist, und Weiterleiten des Probe-Response-Rahmens an den Prozessor, konfiguriert ist,
wobei der HESSID ein Identifikator für eine Sammlung von BSSs ist, bei welchen mindestens ein Netzwerk, welches an einem der BSSs erreichbar ist, an allen der BSSs erreichbar ist.

15. Station nach Anspruch 14,
wobei der Probe-Request-Rahmen ferner ein Service Set Identifier, SSID, -Informationselement, welches einen gewünschten SSID enthält, ein Basic SSID, BSSID, -Feld, welches einen gewünschten BSSID enthält, und ein Destination Address, DA, -Feld, welches eine beabsichtigte Medium Access Control, MAC, -Adresse enthält, umfasst.

## Revendications

1. Procédé de balayage dans un réseau local sans fil comportant au moins un ensemble de services de base, BSS, le procédé de balayage comprenant :
la réception (S10), en provenance d'une première station, d'une trame de demande de sonde comprenant un champ d'identifiant d'ensemble de services étendu homogène, HESSID, (520) contenant un HESSID souhaité (523) de la première station et un champ de type de réseau (524) contenant un type de réseau souhaité de la première station ; et
la transmission (S20) d'une trame de réponse de sonde à la première station en réponse à la trame de demande de sonde dans le cas où :
le champ HESSID dans la trame de demande de sonde est réglé à un HESSID d'une deuxième station ayant reçu la trame de demande de sonde ; et
le champ de type de réseau dans la trame de demande de sonde est réglé à un type de réseau générique ou à un type de réseau de la deuxième station,
dans lequel le HESSID est un identifiant pour une collection de BSS dans laquelle au moins un réseau joignable à l'une des BSS est joignable à toutes les BSS.

2. Procédé de balayage selon la revendication 1,
dans lequel le champ de type de réseau comprend un sous-champ d'accès internet pour spécifier une connectivité à un internet.

3. Procédé de balayage selon la revendication 1,
dans lequel le champ HESSID et le champ de type de réseau sont inclus dans un élément d'information d'interconnexion de réseaux, et
dans lequel l'élément d'information d'interconnexion de réseaux comprend en outre un champ de capacités d'interconnexion de réseaux contenant les capacités d'interconnexion de réseaux annoncées de la première station.

4. Procédé de balayage selon la revendication 3,
dans lequel le champ de capacités d'interconnexion de réseaux comprend un bit HESSID Présent réglé à 1.

5. Procédé de balayage selon la revendication 1,
dans lequel la trame de demande de sonde comprend en outre un élément d'information d'identifiant d'ensemble de services, SSID, contenant un SSID souhaité de la première station, et
dans lequel la trame de réponse de sonde est transmise par la deuxième station dans le cas où le SSID souhaité spécifié dans l'élément d'information SSID est un SSID de la deuxième station.

6. Procédé de balayage selon la revendication 5,
dans lequel la trame de demande de sonde comprend en outre un champ de SSID de base, BSSID, contenant un BSSID souhaité de la première station, et un champ d'adresse de destination, DA, contenant une adresse de commande d'accès au support, MAC, prévue de la première station, et
dans lequel la trame de réponse de sonde est transmise par la deuxième station dans le cas où :
le champ BSSID dans la trame de demande de sonde est réglé à un BSSID de la deuxième station ; et
le champ DA dans la trame de demande de sonde est réglé à une adresse de diffusion ou à une adresse MAC de la deuxième station.

7. Procédé de balayage selon la revendication 6,
dans lequel la première station est une station non-point d'accès, non-AP, capable d'interconnexion de réseaux et la deuxième station est un AP capable d'interconnexion de réseaux.

8. Procédé de balayage selon la revendication 1,
dans lequel la trame de réponse de sonde comprend un élément d'information d'interconnexion de réseaux contenant des informations sur des capacités de service d'interconnexion de réseaux de la deuxième station,
dans lequel l'élément d'information d'interconnexion de réseaux comprend un champ de type de réseau comprenant un sous-champ d'accès internet et un champ de métadonnées de réseau comprenant un sous-champ internet/intranet, et
dans lequel le sous-champ d'accès internet dans le champ de type de réseau est réglé à 1 si des SSID sur ce BSSID ont un sous-champ internet/intranet dans le champ de métadonnées de réseau réglé à 1 ou est réglé à 0 si tous les SSID sur ce BSSID ont un bit internet/intranet réglé à 0.

9. Procédé de balayage dans un réseau local sans fil comportant au moins un ensemble de services de base, BSS, le procédé de balayage comprenant :
la transmission (S20), par une première station, d'une trame de demande de sonde comprenant un champ d'identifiant d'ensemble de services étendu homogène, HESSID, (520) contenant un HESSID souhaité (523) et un champ de type de réseau (524) contenant un type de réseau souhaité ; et
la réception (S10) d'une trame de réponse de sonde en réponse à la trame de demande de sonde en provenance d'une deuxième station,
dans lequel le HESSID souhaité spécifié dans le champ HESSID est un HESSID de la deuxième station,
dans lequel le type de réseau souhaité spécifié dans le champ de type de réseau est un type de réseau générique ou un type de réseau de la deuxième station, et
dans lequel le HESSID est un identifiant pour une collection de BSS dans laquelle au moins un réseau joignable à l'une des BSS est joignable à toutes les BSS.

10. Procédé de balayage selon la revendication 9,
dans lequel le champ de type de réseau comprend un sous-champ d'accès internet pour spécifier une connectivité à un internet.

11. Procédé de balayage selon la revendication 9,
dans lequel la trame de demande de sonde comprend en outre un élément d'information d'identifiant d'ensemble de services, SSID, contenant un SSID souhaité, un champ de SSID de base, BSSID, contenant un BSSID souhaité, et un champ d'adresse de destination, DA, contenant une adresse de commande d'accès au support, MAC, prévue, et
dans lequel le SSID souhaité spécifié dans l'élément d'information SSID est un SSID de la deuxième station, le SSID souhaité spécifié dans le champ BSSID est un BSSID de la deuxième station, et l'adresse MAC prévue spécifiée dans le champ DA est une adresse de diffusion ou une adresse MAC de la deuxième station.

12. Point d'accès, AP, pour la prise en charge d'un procédé de balayage dans un réseau local sans fil comportant au moins un ensemble de services de base, BSS, l'AP comprenant :
un processeur configuré pour générer et traiter des trames ; et
un émetteur-récepteur relié de manière opérationnelle au processeur et configuré pour émettre et recevoir les trames pour le processeur,
dans lequel l'émetteur-récepteur est en outre configuré pour effectuer la réception, en provenance d'une première station, d'une trame de demande de sonde comprenant un champ d'identifiant d'ensemble de services étendu homogène, HESSID, (520) contenant un HESSID souhaité (523) d'une station non-AP et un champ de type de réseau (524) contenant un type de réseau souhaité de la station non-AP et le transfert de la trame de demande de sonde reçue au processeur,
dans lequel le processeur est en outre configuré pour effectuer la génération d'une trame de réponse de sonde en réponse à la trame de demande de sonde dans le cas où le champ HESSID dans la trame de demande de sonde est réglé à un HESSID de l'AP ayant reçu la trame de demande de sonde et le champ de type de réseau dans la trame de demande de sonde est réglé à un type de réseau générique ou à un type de réseau de l'AP et le transfert de la trame de réponse de sonde à l'émetteur-récepteur,
dans lequel l'émetteur-récepteur est en outre configuré pour effectuer la transmission de la trame de réponse de sonde à la station non-AP,
dans lequel le HESSID est un identifiant pour une collection de BSS dans laquelle au moins un réseau joignable à l'une des BSS est joignable à toutes les BSS.

13. Point d'accès selon la revendication 12,
dans lequel la trame de demande de sonde comprend en outre un élément d'information d'identifiant d'ensemble de services, SSID, contenant un SSID souhaité de la station non-AP, un champ de SSID de base, BSSID, contenant un BSSID souhaité de la station non-AP, et un champ d'adresse de destination, DA, contenant une adresse de commande d'accès au support, MAC, prévue de la station non-AP, et
dans lequel la trame de réponse de sonde est générée en outre dans le cas où le SSID souhaité spécifié dans l'élément d'information SSID est un SSID de l'AP, le BSSID souhaité spécifié dans le champ BSSID est un BSSID de l'AP, et l'adresse MAC prévue spécifiée dans le champ DA est une adresse de diffusion ou une adresse MAC de l'AP.

14. Station pour la prise en charge d'un procédé de balayage dans un réseau local sans fil comportant au moins un ensemble de services de base, BSS, la station comprenant :
un processeur configuré pour générer et traiter des trames ; et
un émetteur-récepteur relié de manière opérationnelle au processeur et configuré pour émettre et recevoir les trames pour le processeur,
dans laquelle le processeur est en outre configuré pour effectuer la génération d'une trame de demande de sonde comprenant un champ d'identifiant d'ensemble de services étendu homogène, HESSID, (520) contenant un HESSID souhaité (523) d'une station homologue et un champ de type de réseau (524) contenant un type de réseau souhaité de la station homologue et le transfert de la trame de demande de sonde générée à l'émetteur-récepteur, et
dans laquelle l'émetteur-récepteur est en outre configuré pour effectuer la transmission de la trame de demande de sonde et la réception d'une trame de réponse de sonde en réponse à la trame de demande de sonde dans le cas où le champ HESSID dans la trame de demande de sonde est réglé à un HESSID de la station homologue ayant reçu la trame de demande de sonde et le champ de type de réseau dans la trame de demande de sonde est réglé à un type de réseau générique ou à un type de réseau de la station homologue et le transfert de la trame de réponse de sonde au processeur,
dans laquelle le HESSID est un identifiant pour une collection de BSS dans laquelle au moins un réseau joignable à l'une des BSS est joignable à toutes les BSS.

15. Station selon la revendication 14,
dans laquelle la trame de demande de sonde comprend en outre un élément d'information d'identifiant d'ensemble de services, SSID, contenant un SSID souhaité, un champ de SSID de base, BSSID, contenant un BSSID souhaité, et un champ d'adresse de destination, DA, contenant une adresse de commande d'accès au support, MAC, prévue.
